# EUROPEAN PATENT APPLICATION

(11) **EP 1 267 273 A2**
(43) Date of publication of application: **18.12.2002**
(21) Application number: 02254189.0
(22) Date of filing: 14.06.2002
(51) Int. Cl.: G06F 17/21

(54) **Interactive optical storage medium having preloaded font information, and apparatus and method for reproducing data from interactive optical storage medium**

(30) Priority: 16.06.2001 KR 2001034138; 01.11.2001 KR 2001067827; 23.02.2002 KR 2002009744
(71) Applicant: SAMSUNG ELECTRONICS CO., LTD., Suwon-City, Kyungki-do (KR)
(72) Inventor: Chung, Hyun-kwon, Gwangju-gun, Gyeonggi-do (KR); Ko, Jung-wan, Suwon-si, Gyeonggi-do (KR); Jung, Kij-soo, Hwaseong-gun, Gyeonggi-do (KR); Kim, Byung-jun, Suwon-si, Gyeonggi-do (KR); Bak, Bong-gil, Seoul (KR)
(74) Representative: Robinson, Ian Michael

(57) **Abstract**

An interactive optical storage medium, apparatus and method for reproducing data from the interactive optical storage medium are provided. The interactive optical storage medium (900) includes A/V data including audio or video data, and interactive data, which constitutes a predetermined interactive screen (952) having the A/V data and includes a command for preloading fonts for use in a plurality of interactive screens into a memory (920) of a reproducing apparatus during seamless reproduction. A font to be used is preloaded into the memory of the reproducing apparatus before a screen of A/V data (951) and a screen of interactive data (952), which are simultaneously reproduced, are changed into a new interactive screen, thereby assuring seamless reproduction of the A/V data screen.

## Description

The present invention relates to an interactive optical information storage medium and apparatus and method for reproducing data from the interactive optical storage medium, and more particularly, to an interactive optical information storage medium having preloaded font information, audio/video data, and interactive data, and apparatus and method for reproducing the interactive optical storage medium.

In general, audio/video (A/V) contents and user definition information are recorded on an optical information storage medium. A/V contents are multimedia data having predetermined specifications provided by the optical information storage medium, and user definition information for recording additional supplementary contents is defined by a content manufacturer. The optical information storage medium reproduces only A/V contents through a dedicated reproducing apparatus, and user definition information can be accessed through a computer.

Recently, an optical information storage medium which outputs network-linked interactive contents on a screen and is operable in an environment based on web documents has been produced, and the optical information storage medium is referred to as an interactive optical storage medium. Contents recorded on the interactive optical storage medium can be reproduced by two modes, that is, a conventional A/V mode, which reproduces only conventional A/V contents, and an interactive mode, which provides A/V contents and user definition information in a web environment. When a user selects the interactive mode, an apparatus for reproducing data from the optical storage medium reads web documents recorded on the interactive optical storage medium and outputs a web-based screen. That is, A/V data and interactive data are simultaneously output on the web-based screen.

When the A/V contents relate to a movie, the movie is run on the web-based screen, and simultaneously a user can view interactive contents comprised of various other information related to the movie, in the optical information storage medium or via network links. Other information may be any kind of information, such as graphic image files, text files, or audio files.

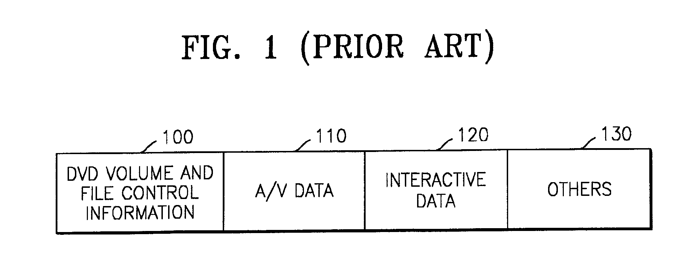

Figure 1 is a schematic view of a conventional interactive optical information storage medium. Referring to Figure 1, an interactive digital versatile disc (DVD), which is a kind of the interactive optical storage medium, includes a control information region 100, an A/V data region 110, and a DVD interactive data region 120.

DVD volume information and file information are recorded in the control information region 100. Audio data and video data as moving picture experts group (MPEG) bit streams and information for reproducing the audio data and the video data are recorded in the A/V data region 110.

Data related to web documents such as HTML documents, which enable construction of a web-based environment, are recorded in the DVD interactive data region 120. The data related to web documents are web resources including a variety of image files and audio files, which are inserted into the web documents. Besides these regions, others 130 in which additional supplementary information for user is recorded, may be further included in the optical information storage medium.

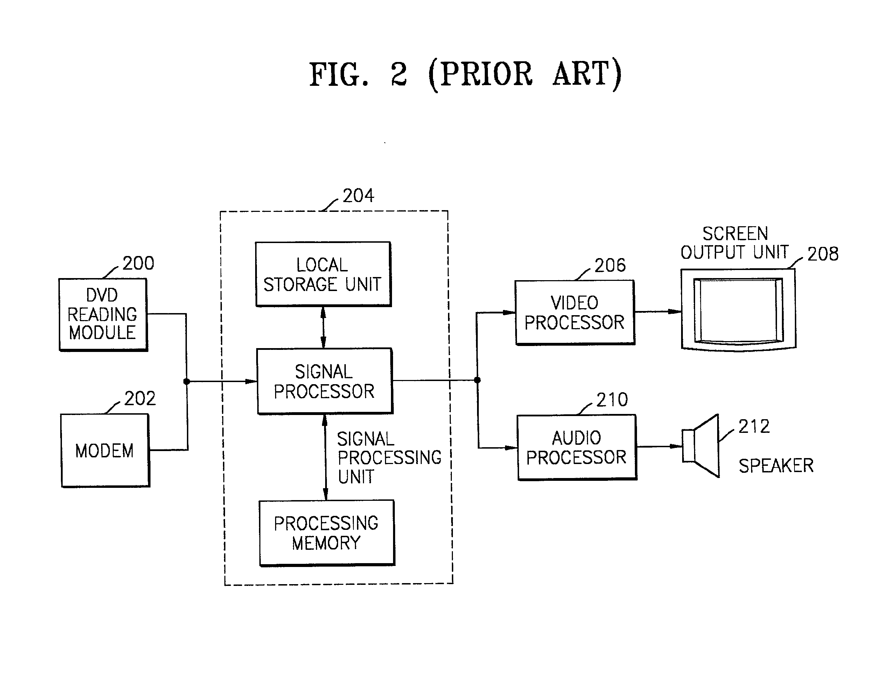

Figure 2 illustrates the structure of an apparatus for reproducing information from the DVD shown in Figure 1. Referring to Figure 2, a DVD reading module 200 reads data recorded on the DVD. A modem 202 receives web documents via external networks. Web contents received via external networks may be used in an interactive operation environment, like web contents recorded in the interactive data region of the DVD.

A signal processor 204 processes and stores DVD signals output from the DVD reading module 200 and web contents received by the modem 202 via external networks. A video processor 206 processes only video signals among signals processed by the signal processor 204 and outputs the processed video signals on a screen output unit 208.

An audio processor 210 processes only audio signals among the signals processed by the signal processor 204 and outputs the processed audio signals to a speaker 212.

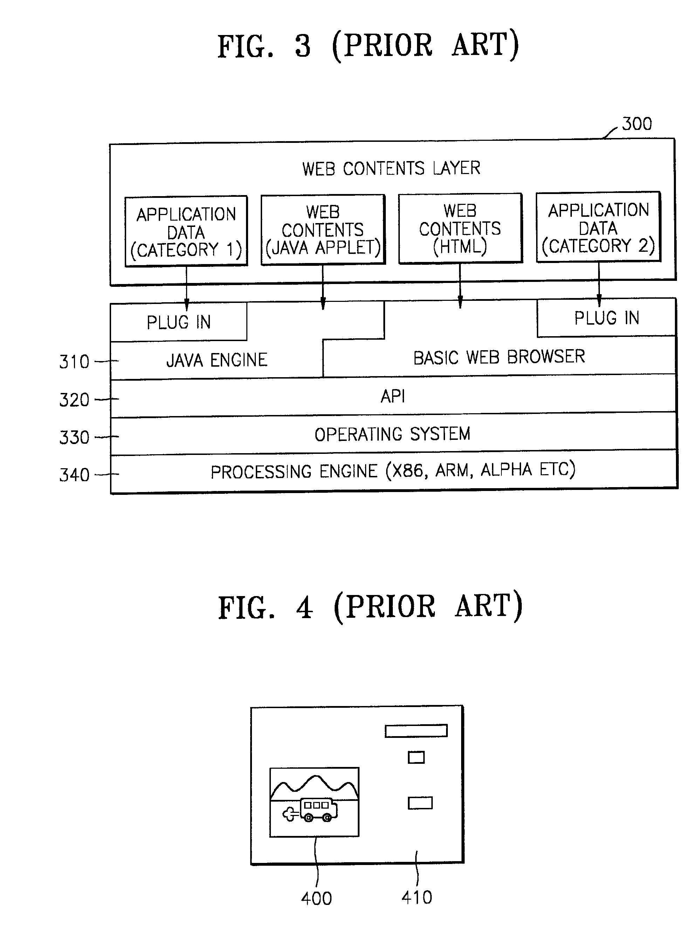

Figure 3 illustrates a software layer model of the apparatus shown in Figure 2. Referring to Figure 3, a web contents layer 300 outputs web contents received via networks, or contents stored in the optical information storage medium. The contents are comprised of A/V data, audio data, graphic images, JAVA applet, HTML, or XML.

An application layer 310 supports plug-in function and includes engines (JAVA engines or basic web browsers) for operating document files of web contents.

An application programming interface (API) layer 320 makes the connection between the lower portion of a hardware layer 330 and the upper portion of a software layer 340 according to a specific protocol.

Figure 4 illustrates an example of an interactive DVD screen. Referring to Figure 4, the interactive DVD screen includes an A/V data screen region 400 in which A/V data are reproduced, and an interactive data screen region 410 in which interactive data are reproduced. In general, the interactive DVD screen is similar to the shape of a web browser screen. When A/V data are reproduced in the A/V data screen region 400, interactive data for additionally serving the reproduced A/V data to a user are output on the interactive data screen region 410. The interactive data screen region 410 is formed using web documents, such as HTML documents, and thus has the function of interactive reproduction for controlling A/V data reproduction as well as functions of providing other information, such as information for searching via networks and web site linking.

Conventional apparatuses for reproducing information from interactive DVDs have limitations in capacity of an internal memory. Thus, all fonts related to various letter types used for outputting the interactive data stored in the DVD on a screen cannot be stored in the internal memory of the apparatus. That is, fonts, which are basically used in an interactive data screen, require about 1.5 megabytes of memory, including Korean and Chinese characters. When various fonts, such as MingJo and Gothic, are further used in the interactive data screen, the amount of memory required becomes larger, and thus there are limitations in capacity to store all fonts in the internal memory of the apparatus. The apparatus stores and uses only minimum built-in fonts, and if necessary, reads (or loads) other fonts used for outputting the interactive data stored in the DVD on a screen. The method for loading fonts and an apparatus for reproducing an interactive DVD implemented by the method may load fonts newly whenever a new interactive data screen is output. In the case of seamless reproduction in which the interactive data screen is automatically changed during A/V data reproduction, the interactive data for a newly output interactive data screen must be loaded from the DVD into an internal memory of the apparatus. However, since it takes time to load fonts, the change in the A/V data screen is delayed during the time, and a interruption of seamless reproducing of AV content occurs.

It is an aim of the present invention to provide an interactive optical storage medium that avoids interruption of seamless reproducing of A/V data.

It is a second aim of the present invention to provide apparatus and method for reproducing data stored on the interactive optical storage medium having preloaded information.

According to one aspect of the present invention, there is provided an interactive optical storage medium. The medium includes A/V data including audio or video data, and interactive data which constitutes a predetermined interactive screen having the A/V data and includes a command for preloading fonts for use in a plurality of interactive screens into a memory of a reproducing apparatus during seamless reproduction.

Preferably, the interactive data are web-based documents.

Preferably, the interactive data includes a command for preloading font data for use in a subsequent interactive screen into the present interactive data during seamless reproduction.

Preferably, a font identifier (ID) of a font to be preloaded is provided in the preload information when performing a command for preloading font data.

Preferably, a font-range of a font to be preloaded is provided in the preload information when performing a command for preloading font data.

Preferably, the font-range of the font is defined using a letter code which is stipulated according to an ISO 10646 standard.

Preferably, attribute information of a font to be preloaded is provided in the preload information when performing a command for preloading font data.

Preferably, the attribute information of the font includes font-family (representing a group in which the font is included, and a font name) , font-style (representing the style of the font), font-variant (representing whether or not the font can be represented as a bold type), font-weight (representing the thickness of the font), font-stretch (representing the aspect ratio of the font), and font-size (representing the size of the font).

Preferably, the medium further includes a discard command for removing a loaded font.

Preferably, the discard command is a command for designating the path and name of a font file and removing them.

Preferably, the discard command is a command for removing a font having a corresponding ID by designating a font ID.

According to another aspect of the present invention, there is provided an interactive optical storage medium. The medium includes an A/V data region in which audio or video data is recorded, an interactive data region in which a predetermined interactive screen having the A/V data is constituted and a command for preloading fonts for use in a plurality of interactive screens into a memory of a reproducing apparatus during seamless reproduction is included, and an interactive data-copying region in which the same data as interactive data information region are stored in preparation for damages in the interactive data.

According to another aspect of the present invention, there is provided an apparatus for reproducing data from an interactive optical storage medium. The apparatus includes a first memory for storing A/V data read from the interactive optical storage medium, a second memory for storing interactive data read from the interactive optical storage medium, an A/V data decoder for decoding the A/V data stored in the first memory, and an interpreting engine for interpreting the interactive data from the second memory and outputting the interpreted interactive data on a screen. Here, the second memory takes fonts to be preloaded, from the interactive optical storage medium and stores the fonts when the interpreting engine requests performance of a preload command.

Preferably, the interactive data includes a command for preloading font data for use in a subsequent interactive screen into the present interactive data during seamless reproduction.

Preferably, the A/V data decoder is a moving picture experts group (MPEG) decoder which decodes A/V data compressed in the format of MPEG.

Preferably, the fonts stored in the second memory according to the preload command, are fonts for use in a subsequent screen after the present interactive screen.

According to another aspect of the present invention, there is provided a system for reproducing data from an interactive optical storage medium. The system includes an interactive optical storage medium on which interactive data having a preload command and A/V data are recorded, a first memory for reading the A/V data from the interactive optical storage medium and storing the A/V data, a second memory for reading the interactive data from the interactive optical storage medium and storing the interactive data, a decoder for decoding the A/V data from the first memory, an interpreting engine for interpreting the interactive data from the second memory and providing interactive screen data, and a screen output unit, which forms a screen according to the interactive screen data received from the interpreting engine, synthesizes the A/V data received from the decoder, with the interactive screen data in the screen and outputs the result of synthesis. Here, the second memory takes fonts to be preloaded, from the interactive optical storage medium and stores the fonts when the interpreting engine requests performance of a preload command.

Preferably, the screen output unit provides a moving picture screen region in which the decoded A/V data are reproduced, and a screen region in which network searching and linking and an interactive operation are performed.

According to another aspect of the present invention, there is provided a method for reproducing data from an interactive optical storage medium having preloaded font information. The method includes reading a control information file having information for constituting an initial interactive screen, from the interactive optical storage medium, loading fonts, which are defined by displayable languages and by the kind of basic fonts of the control information file, into a memory, reading a data file of an interactive screen to be output, reading an indicated preload file when a preload command is included in the data file of the interactive screen and loading fonts, which are defined by the preload file, into the memory of a reproducing apparatus, outputting data of the interactive screen according to the data file of the interactive screen, and synthesizing a screen in which A/V data are reproduced, with the interactive screen and outputting the result of synthesis.

Preferably, the method further includes removing a corresponding font from the second memory when the interactive data includes a discard command for removing a loaded font.

According to another aspect of the present invention, there is provided a method for preloading fonts stored in an interactive optical storage medium into an apparatus for reproducing data from the interactive optical storage medium. The method includes reading data file of an interactive screen from the interactive optical storage medium, checking whether a preload command is included in the data file of an interactive screen and reading fonts to be preloaded from the interactive optical storage medium and loading the fonts into a memory of the apparatus for reproducing data from the interactive optical storage medium when the fonts to be preloaded are included in the data file of an interactive screen, outputting a screen of interactive data, and removing fonts from the memory when discarding of the fonts is requested.

According to another aspect of the present invention, there is provided an interactive optical storage medium. The medium includes a first table which defines displayable languages when a screen of interactive data is output, a second table, which defines languages for use in the screen of interactive data, which corresponds to languages for use in a screen of A/V data, and a third table which defines basic fonts to be used by languages defined by the first table.

Preferably, the second table includes control information which automatically selects one from of the displayable languages defined by the first table, when a language for use in the screen of A/V data and a language for use in the screen of interactive data are not defined by the first table.

For a better understanding of the invention, and to show how embodiments of the same may be carried into effect, reference will now be made, by way of example, to the accompanying diagrammatic drawings in which:
Figure 1 is a schematic view of a conventional interactive optical information storage medium;
Figure 2 illustrates the structure of an apparatus for reproducing information from the interactive DVD shown in Figure 1;
Figure 3 illustrates a software layer model of the apparatus shown in Figure 2;
Figure 4 illustrates an example of an interactive DVD screen;
Figure 5 illustrates the directory structure of an interactive optical storage medium having preloaded font information according to the present invention;
Figures 6A and 6B are tables illustrating displayable languages and an example of basic font indication information, which are defined by an interactive navigation file DVD_ENAV. IFO of Figure 5;
Figure 7 is an example of interactive screens A, B, and C according to the present invention;
Figure 8 illustrates the structure of a volume space of the interactive optical storage medium having preloaded font information;
Figure 9 illustrates an interactive optical storage medium having preloaded font information according to an embodiment of the present invention;
Figures 10A and 10B are flow charts illustrating a method for operating an interactive optical storage medium having preloaded font information according to the present invention; and
Figures 11A and 11B are flow charts illustrating a method for loading fonts stored in the interactive optical storage medium into an apparatus for reproducing information from the interactive optical storage medium.

Hereinafter, preferred embodiments of the present invention will be described in detail with reference to the accompanying drawings.

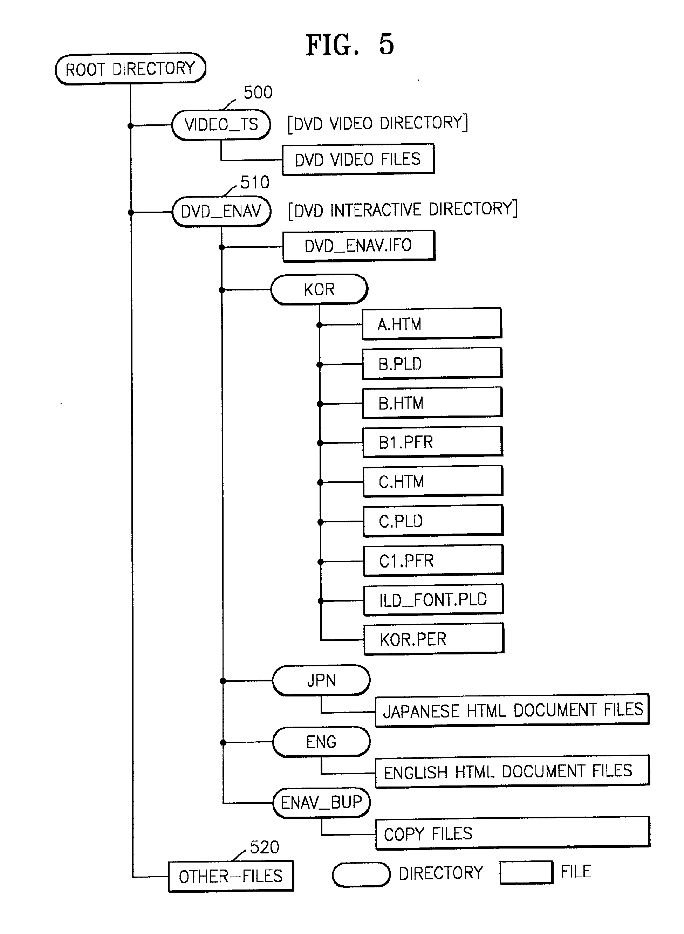

Figure 5 illustrates the structure of a root directory of an interactive optical storage medium having preloaded font information. Referring to Figure 5, the interactive optical storage medium having preloaded font information includes a video data directory 500 having A/V data, which are substantially reproduced in an interactive data screen, information for reproducing the A/V data, an interactive data directory 510 used for outputting interactive data on a screen, and other files 520 having other optional information.

A reproducing control information file for controlling files used for reproducing video/audio information, a video title set managing file, a video title menu file, and an A/V file to be reproduced are included in the video data directory 500.

Data files composing an interactive screen are included in the interactive data directory 510. It is assumed that the data files composing an interactive screen are written in HTML language and there are output screens A, B, and C. Further, it is assumed that seamless reproduction are simultaneously performed on screens A and B including an A/V data reproduction picture, and a screen C is selected by a user or according to a system.

A control information file (i.e., DVD_ENAV . IFO) having control information used for constituting an initial interactive screen is included in the interactive data directory 510.

Further, a HTML file (i.e., A.HTM) having data of the output screen A in relation to video reproduction information, a control information file (B.PLD) having preloaded information of data of the output screen B, a HTML file (B.HTM) having the data of the output screen B, a HTML file (C.HTM) having data of the output screen C, a control information file (C.PLD) having preloaded information of data of the output screen C, and a font file (C1.PER) for use in the data of the output screen C are included in the interactive data directory 510. There may also be files, such as files for outputting interactive data on a screen according to displayable languages. In such a case, for example, when constituting a Korean displayable interactive screen, a control information file (i.e, ILD_FONT.PLD) for reading basic fonts to be initially loaded and a Korean font file (KOR.PFR) can be further included in the interactive data directory 510. Information related to displayable languages is also included in the DVD_ENAV.IFO.

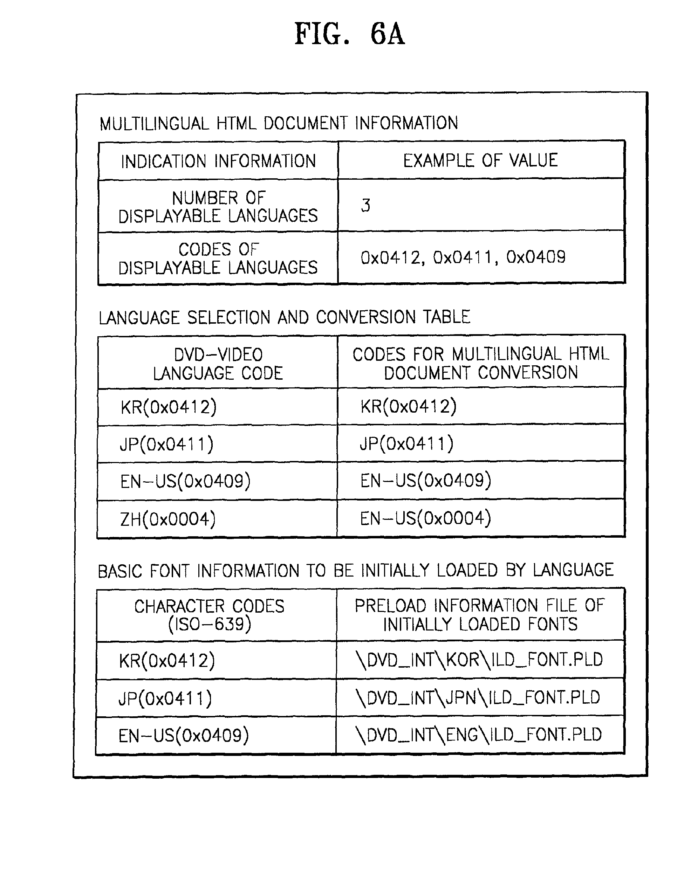

Figure 6A is an example of a table illustrating displayable languages and an example of basic font indication information defined in the DVD_ENAV. IFO of Figure 5. Information related to displayable languages, languages to be output on the interactive screen in relation to the A/V data, and basic font indication information for use in interactive screen data are included in control information used for constituting an initial interactive screen.

Referring to Figure 6A, three languages are displayable in a multilingual HTML document support indication information of the DVD_ENAV.IFO. This means that there are three displayable languages when constituting a DVD interactive screen. Codes for displayable languages are 0x0412, 0x0411, and 0x0409 and are Korean, Japanese, and English codes, which are stipulated according to an ISO-639 standard. This means that Korean, Japanese, and English can be displayed when the interactive screen is output.

A Korean code KR(0x0412), a Japanese code JP(0x0411), an English code EN-US(0x0409), and a Chinese code ZH(0x0004), which are used in subtitles of a DVD video screen, and language codes to be output on the interactive screen according to languages are defined in a language selection and conversion table. Languages displayable according to subtitles are output on the interactive screen. Referring to the table shown in Figure 6A, it is noted that the language of the corresponding interactive screen is defined as English in case that Chinese is used in the subtitle.

Character codes KR(0x0412), JP(0x0411), and EN-US(0x0409) to be used in the interactive screen, and basic font information to be initially loaded according to the character codes are defined in basic font information to be initially loaded by language.

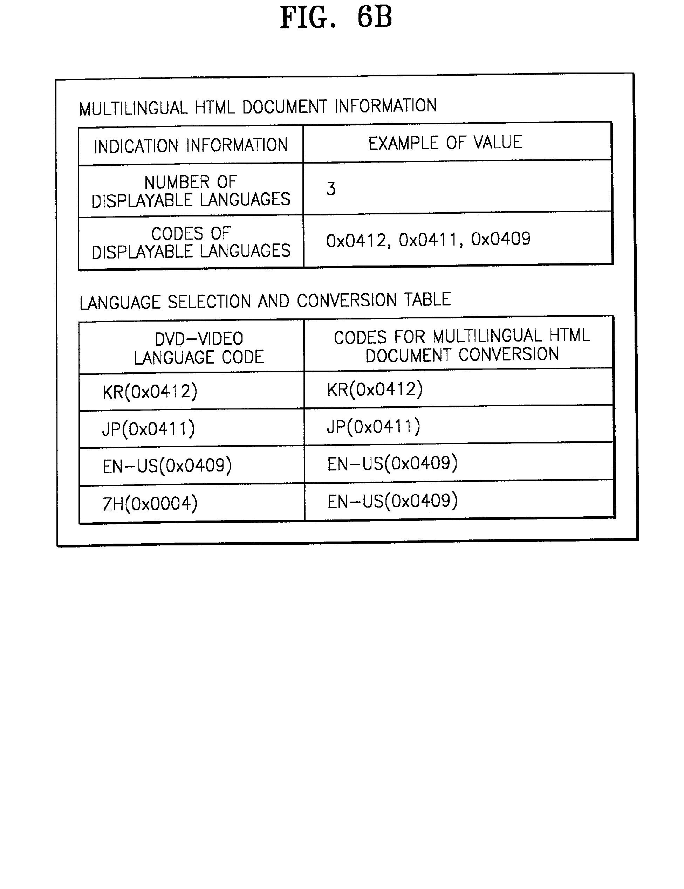

Figure 6B is a table illustrating that there are only displayable language information in the DVD_ENAV.IFO when basic fonts are defined in a HTML document in the format of a embedded font @font_face. When the basic fonts are in the HTML document in the format of a embedded font, the basic font information to be initially loaded shown in Figure 6A will be omitted.

In the case of the interactive screen using Korean, an example of the control information file ILD_FONT.PLD for reading basic fonts is as follows.

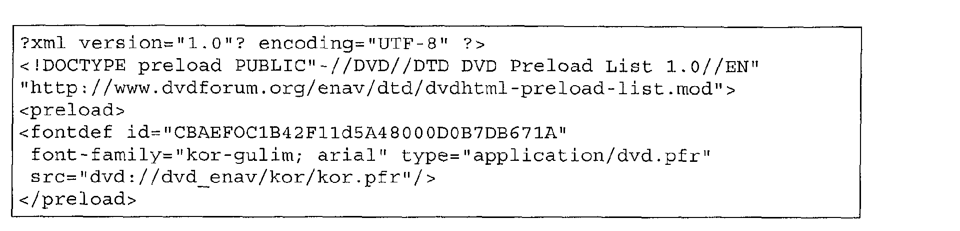

A portion which defines the resource of fonts to be loaded is included in the ILD_FONT.PLD and corresponds to a unique identifier (ID) of a corresponding font. font-family is described in the format of "actual name; family name". When the family name is included in the ILD_FONT.PLD and an apparatus for reproducing information from the interactive optical storage medium does not have a font corresponding to 'actual name', the apparatus can replace the present font with another font, which belongs to the same group as that of 'family name' and is stored in the memory of the apparatus. When the control information file is read, the apparatus loads the font defined in the above-mentioned portion into its own memory. After the font is loaded, the data of the interactive screen are read, and the interactive screen is formed, files (hereinafter, HTML files) for indicating interactive screens A, B, or C in which the A/V data of the interactive optical storage medium are reproduced and simultaneously output, are read and performed.

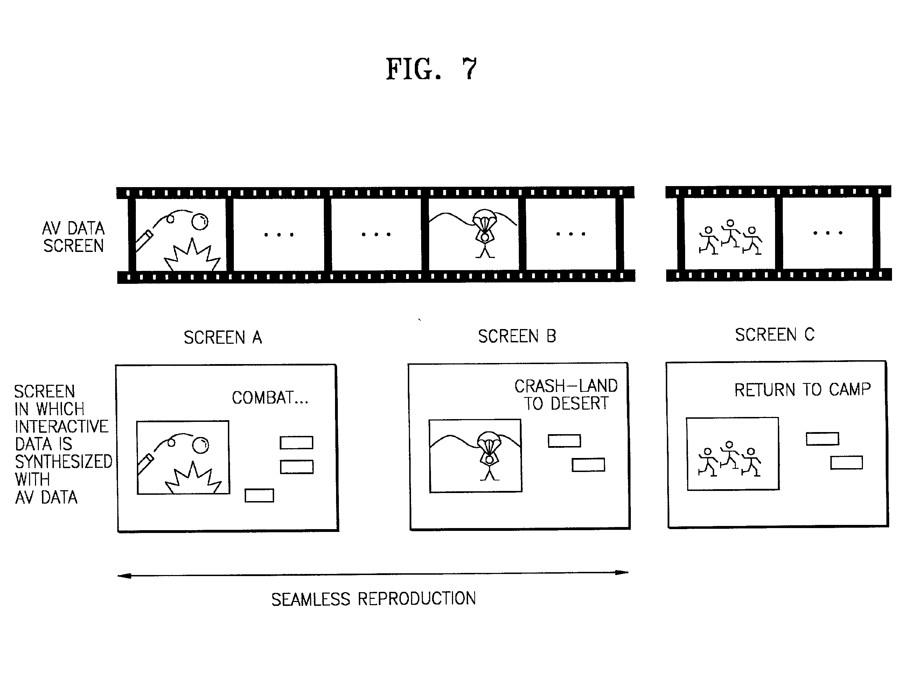

Figure 7 is an example of interactive screens A, B, and C according to the present invention. An example of the file A.HTM for providing information of the screen A is as follows.

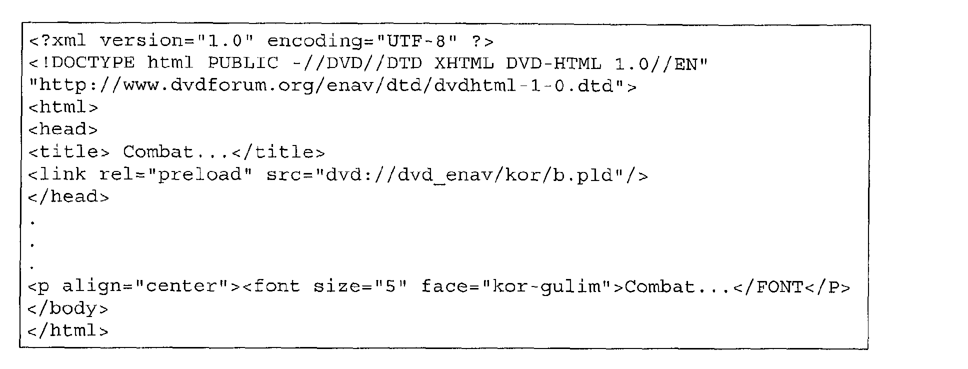

The font size "5" of kor-gulim and a screen, which is aligned at the center of the screen and is output as "Combat...", are provided (<p align="center"><font size="5" face="kor-gulim">Combat...). The file A.HTM provides a path of the file B.PLD having preloaded information of data of the screen B, which is to be linked and seamless-reproduced after the screen A (<link rel="preload"src="dvd://dvd_enav/kor/b.pld"/>).

An example of the file B.PLD having preloaded information of data of the screen B is as follows.

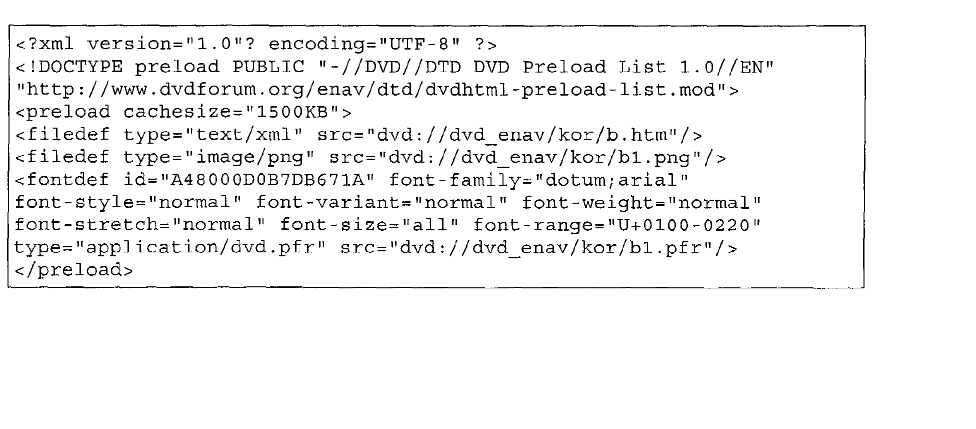

The file B.PLD preloaded from the file A.HTM reads the above information. The size of a memory required for the interactive optical storage medium to be prepared when preloading is "1500KB". The file B.HTM as a data file for constituting the screen B, and the font B1.PFR, which is to be used in the screen B, is preloaded into the memory. The path of files to be preloaded is provided like "dvd://dvd_enav/kor/b.htm", "dvd://dvd_enav/kor/b1.png ", and "dvd://dvd_enav/kor/b1.pfr".

Like an information file fontdef id="A48000D0B7DB671A", the above information files include an attribute of a <fontdef> element, which defines a unique identifier (ID) of a predetermined font. The apparatus for reproducing data from an interactive optical storage medium searches for a font having an ID, which is identical with an identifier (ID) of a font mentioned in the <fontdef> element, from a resident font database. When there is no font that is identical with the ID in the apparatus, the apparatus tries to takes a font from a web server or an optical information storage medium by using "src" attribute of <fontdef> element.

However, when a font that is identical with the ID cannot be found, the apparatus takes a font within a font-range of <fontdef> element. The font-range attribute of <fontdef> element defines a font-range as a position of a letter code, which is stipulated according to an ISO 10646 standard. The font-range is represented as a hexadecimal number started from a prefix "U+". For example, U+05D1 corresponds to "Hebrew letter bet" of the letter code stipulated according to the ISO 10646 standard. Likewise, by designating the font-range declaring the range of a font to be preloaded, the apparatus can preload only a font that is essential for reproduction. Using "-" and "," the font-range may be defined consecutively or inconsecutively below.

Example 1) font-range= "U+AC00-D7FF" ; Font-range is defined from AC00 to D7FF.

Example 2) font-range= "U+0370-03FF, U+1F00-1FFF" ; Font-range is defined from 0370 to 03FF (modern Greek) and from 1F00 to 1FFF(polytonic Greek).

The attributes of <fontdef> element, such as font-family, font-style, font-variant, font-weight, font-stretch, and font-size, is additional attribute information that is provided so that the most similar font to be displayed on a screen can be found when a font that is identical with the above-mentioned font family cannot be found. In other words, when there is no font that is most suitable for specifications intended by a content manufacturer, a font that can be replaced and displayed on the screen is searched and displayed on the screen, using additional information when preloading of the font.

Since the data file and font file of the screen B have been already loaded into the memory of the apparatus when the screen B and the A/V data are seamless-reproduced at the time when the screen A is output from the file A.HTM and defined, time required to load files for use in outputting the screen B can be reduced. Thus, an interruption of seamless reproducing the A/V data of the screen can be prevented.

An example of the file B.HTM for providing information of the screen B is as follows.

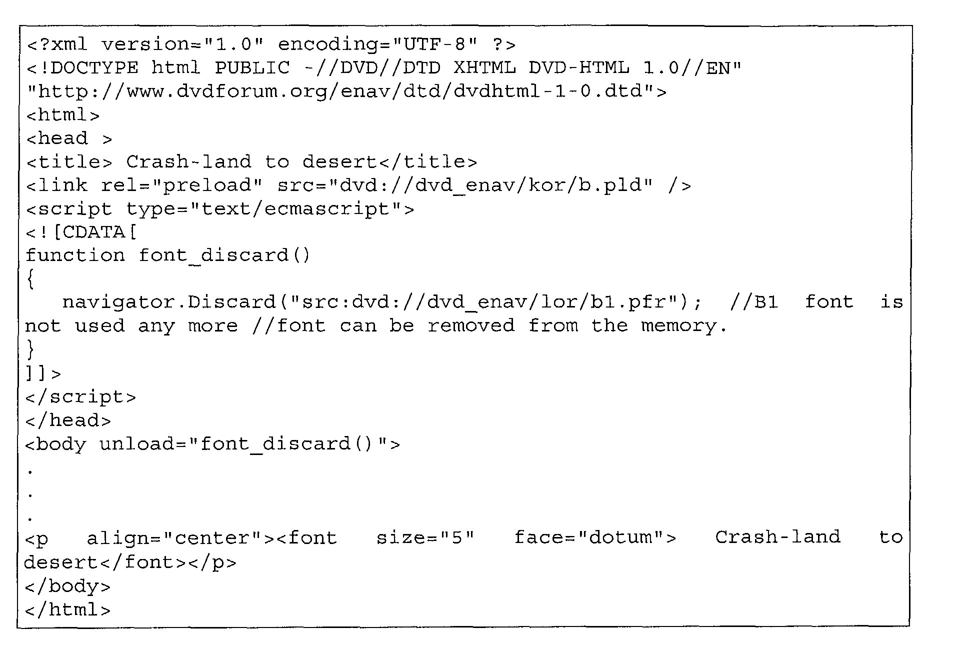

The file B.HTM provides a screen displayed as "Crashland to desert". Since the font B1.PFR corresponding to "dotum" has been already loaded into the memory of the apparatus when the screen A is output from the file B.HTM, a separate loading operation and time required therefor are unnecessary. Thus, seamless reproduction without an interruption caused by fonts loading can be guaranteed during output of the screen B, which is performed simultaneously with reproduction of the A/V data. When the output of the screen B is terminated, the file B.HTM can include a command font_discard for removing the font B1.PER in order to relieve burden applied to a memory capacity due to the font B1.PFR. Even though "navigator.Discard("src:dvd://dvd_enav/lor/b1.pfr")" is used as an example of a command for removing a font in the above-mentioned code table, the corresponding font may be removed by simply mentioning only the font ID defined in the above-mentioned example of ILD_FONT.PLD. A code having the above-mentioned function may be described below.

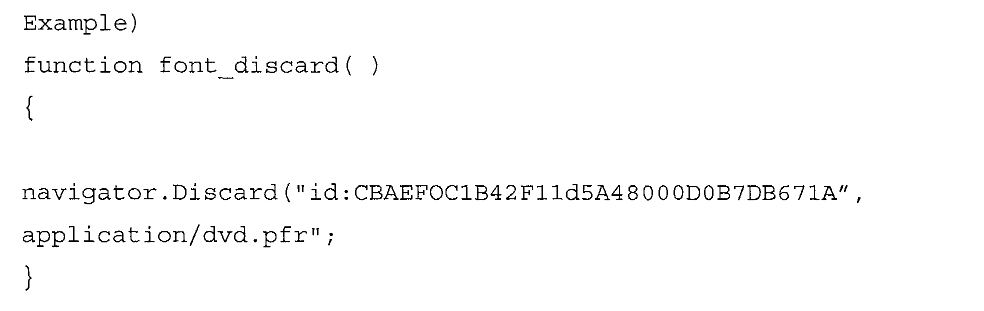

Last, an example of the file C.HTM as a data file constituting the screen C, is as follows.

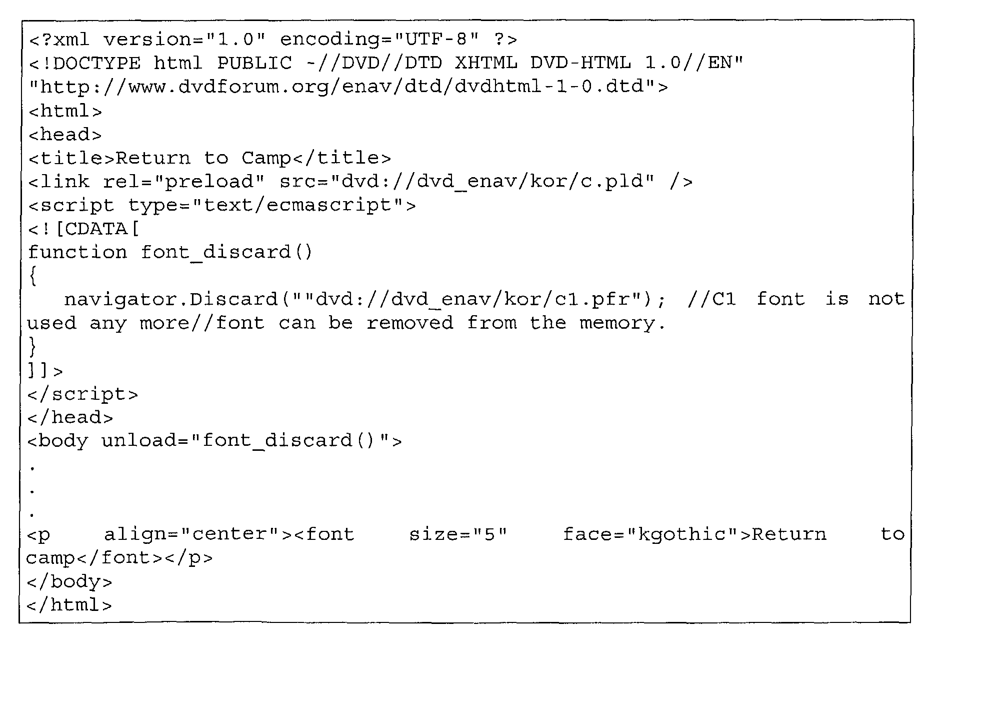

The file C.HTM provides a screen displayed as "Return to camp". "Kgothic", which is to be used for outputting the screen C, relates to the file C1.PFR, and thus is preloaded when a preload command is performed by a file C.PLD (not shown). However, since the screen C is not seamless-reproduced, an interruption of seamless producing from the previous screen B caused by time required for preloading fonts does not matter. When the output of the screen C is terminated, a command font_discard for removing a font may be performed in the file C.HTM in order to relieve burden applied to a memory capacity of the apparatus. Here, even in the command font_discard, like the above-mentioned code example, besides a method for removing the whole file by searching a file having fonts, there may be a method for removing a corresponding font by including only a font identifier (ID) in the command font_discard.

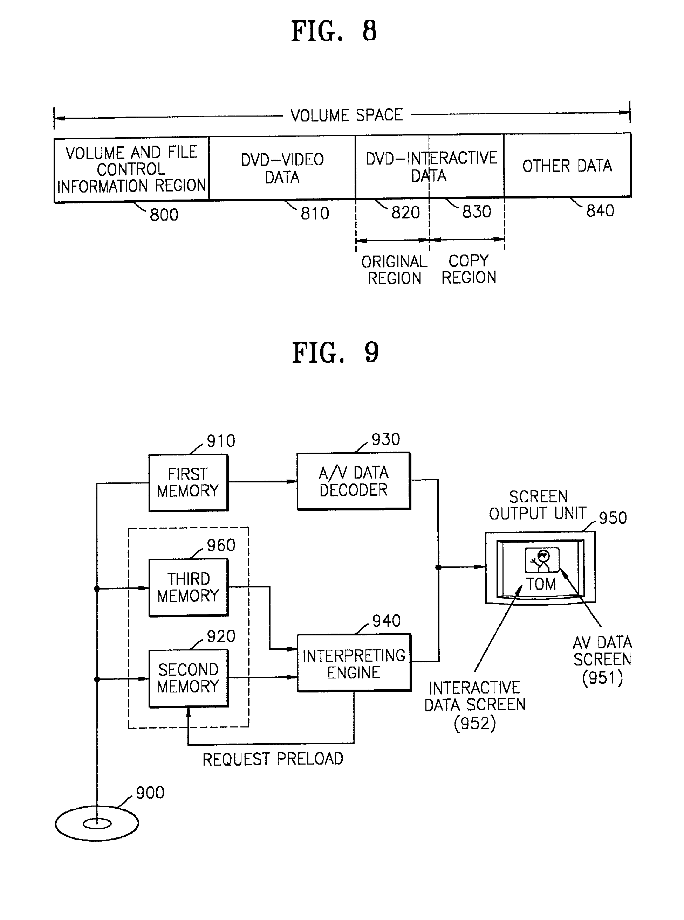

Figure 8 illustrates the structure of a volume space of the interactive optical storage medium having preloaded font information. Referring to Figure 8, the interactive optical storage medium includes a control information region 800 in which control information of the interactive optical storage medium is recorded, a video data region 810 in which A/V data and reproduction information for reproducing the A/V data are recorded, an interactive data region 820 in which the above-mentioned preloaded font interactive information is recorded, and an interactive data-copying region 830 in which data of the interactive data region 820 are stored repeatedly in preparation for damages in the interactive data region 820. The interactive optical storage medium can further include another region in which product information or user's information is recorded.

Figure 9 illustrates an interactive optical storage medium having preloaded font information according to an embodiment of the present invention. Referring to Figure 9, the interactive optical storage medium 900 includes information for controlling an interactive screen, which preloads fonts of a screen to be seamless-reproduced, data for controlling an output screen, and interactive data and A/V data, which are to be reproduced.

A first memory 910 buffers compressed A/V data, which are read from the interactive optical storage medium 900.

A second memory 920 stores the interactive data read from the interactive optical storage medium 900, and takes and stores fonts included in the interactive optical storage medium 900, when request for preloading a predetermined font is received from the interactive data interpreting engine 940.

An A/V data decoder 930 decodes the A/V data stored in the first memory 910.

An interactive data-interpreting engine 940 interprets HTMLs, JAVA scripts applet, and fonts, which are used for interpreting the interactive data read from the second memory 920 or the third memory 960. When a command for preloading the interactive data is included in the interactive data-interpreting engine 940, the interactive data-interpreting engine 940 preloads the interactive data into the second memory 920.

A screen output unit 950 synthesizes and outputs information interpreted by the A/V data decoder 930 and by the interactive data-interpreting engine 940. The screen 950 provides a screen which is similar to the shape of a web browser including an A/V data screen region 951 in which the decoded A/V data are reproduced, and an interactive data screen region 952 in which network searching and linking, and an interactive operation are performed.

Fonts, which are resident in the apparatus for reproducing information from the interactive optical storage medium 900, and basic fonts, which are initially loaded by the interactive optical storage medium 900, are stored in a third memory 960. When the preloaded fonts requested by the interactive data-interpreting engine 940 are not included in the second memory 920, the basic fonts included in the third memory 960 are transferred to the interactive data-interpreting engine 940. In such a case, when there are no fonts requested by the third memory 960, basic fonts belonging to the family of the requested and preloaded fonts are transferred to the interactive data-interpreting engine 940.

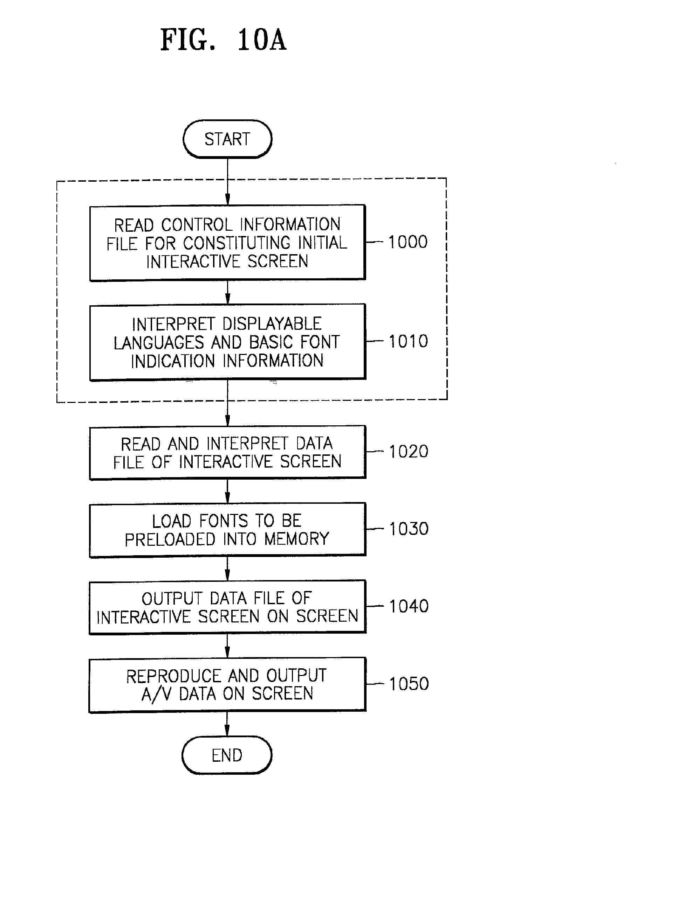

Figure 10A is a flow chart illustrating a method for operating an interactive optical storage medium having preloaded font information according to the present invention.

In step 1000, a file (i.e., the above-mentioned DVD_ENAV.IFO) having control information for constituting an initial interactive screen is read from the interactive optical storage medium. In step 1010, basic fonts are loaded into a memory (i.e., the third memory 960 of Figure 9) of the apparatus for reproducing information from the interactive optical storage medium, according to displayable languages and the basic font indication information.

In step 1020, data file of a defined interactive screen is read. In step 1030, an indicated preload file is read, and fonts defined in the preload file are loaded into the second memory 920 of the apparatus when a preload command is included in the data file of the interactive screen. In step 1040, the apparatus checks whether or not there is the same font as a font identifier (ID) when loading of the fonts defined in the preload file, and then the apparatus loads the font having the same ID as the font ID into the second memory. Also, the apparatus can load only a font within a corresponding range into the second memory by referring the font-range defined in the preload file. After the font is preloaded, the data file corresponding to the interactive screen in step 1020 is output on a screen. In step 1050, A/V data are reproduced and output on the screen. A font-discard command in the data file may be performed to discard a corresponding font from the second memory of the apparatus. The font-discard command is performed by discarding a corresponding font file or by removing a font having the same ID using a font identifier (ID).

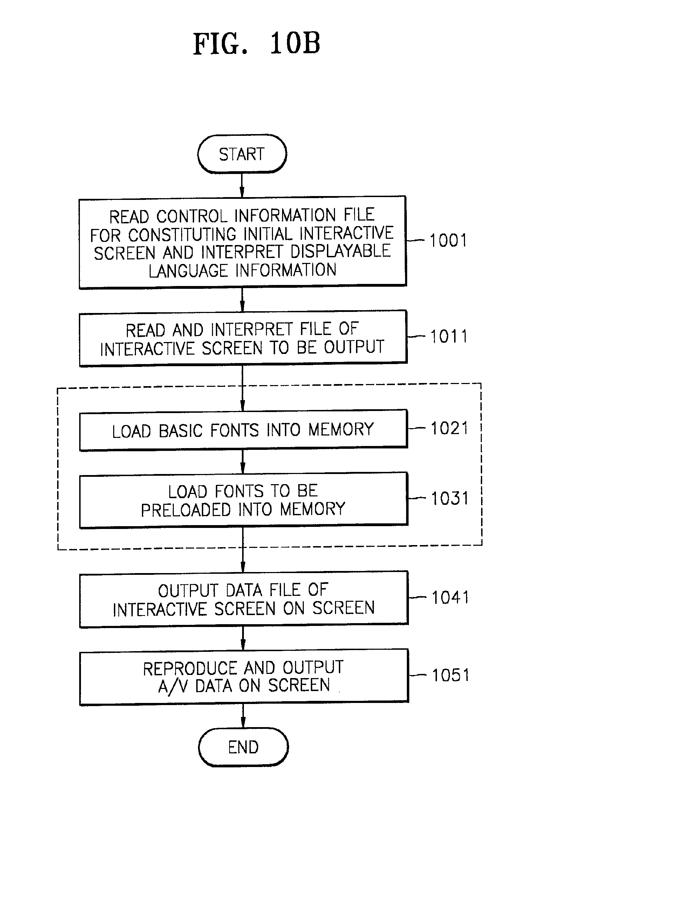

Figure 10B is another flow chart illustrating the method for operating an interactive optical storage medium having preloaded font information according to the present invention.

In step 1001, a file (i.e., the above-mentioned DVD_ENAV.IFO) having control information for constituting an initial interactive screen is read from the interactive optical storage medium. In step 1011, a data file of the interactive screen to be output is read and interpreted. In step 1021, basic fonts stored in the interactive optical storage medium are loaded into a memory of the apparatus for reproducing information from the interactive optical storage medium. In step 1031, fonts to be preloaded are loaded into the memory of the apparatus. In step 1041, the apparatus checks whether or not a font having the same ID as a font identifier (ID) to be preloaded has been already loaded into the memory and has been stored in the memory. If there is no font having the same ID as a font identifier (ID) to be preloaded has not been already loaded into the memory and has not been stored in the memory, the apparatus will reload a corresponding font into the memory. Also, the apparatus can load a font within a corresponding range into the second memory by referring the font- range defined in the preload file. After the font is preloaded, the data file corresponding to the interactive screen is output on a screen. In step 1051, A/V data are reproduced and output on the screen. A font-discard command in the data file may be performed to discard a corresponding font from the memory of the apparatus. The font-discard command is performed by discarding a corresponding font file or by removing a font having the same ID using a font identifier (ID).

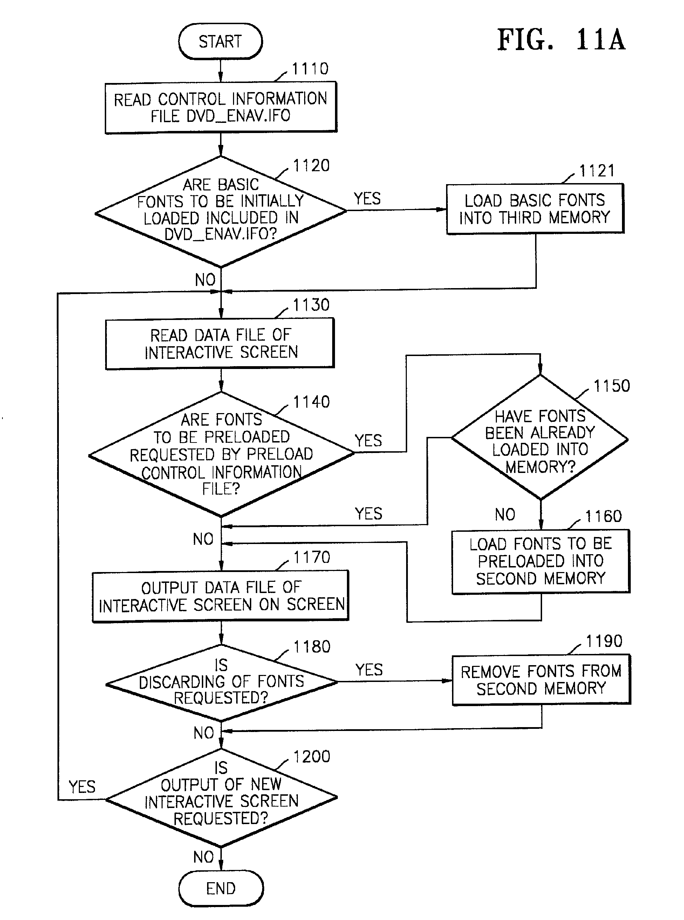

Figure 11A is a detailed view of Figure 10A and a flow chart illustrating a method for loading fonts stored in the interactive optical storage medium into an apparatus for reproducing information from the interactive optical storage medium.

Referring to Figures 5 through 7 and 11A, in step 1110, the file DVD_ENAV.IFO having control information for constituting an initial interactive screen is read from the interactive optical storage medium. In step 1120, it is checked whether basic fonts to be initially loaded are included in the control information file. In step 1121, the basic fonts are loaded into a third memory (same as the third memory 960 of Figure 9) when the basic fonts to be initially loaded are included in the control information file. In step 1130, data file of a defined interactive screen is read when the basic fonts to be initially loaded are not included in the control information file in step 1120 and after step 1121. In step 1150, it is checked using a font ID whether corresponding fonts have been already loaded into the memory when preload information are included in the data file of the interactive screen and fonts to be preloaded are requested by the preload control information file in step 1140. In step 1160, the fonts are loaded into a second memory when the fonts have been not loaded into the memory as the result of checking in step 1150. The apparatus can load a font within a corresponding range into the second memory by referring the font-range defined in the preload file. In step 1170, the data file of the interactive screen is output on a screen when fonts to be preloaded are not requested by the preload control information file after step 1160 or in step 1140. In step 1190, the fonts are removed from the second memory when discarding of the fonts stored in the second memory is requested in step 1180. The font-discard command is performed by discarding a corresponding font file or by removing a font having the same ID using a font identifier (ID). The above-mentioned operation is repeated with step 1130 when discarding of the fonts is not requested, or when output of a new interactive screen is requested after the fonts are removed from the second memory in step 1200.

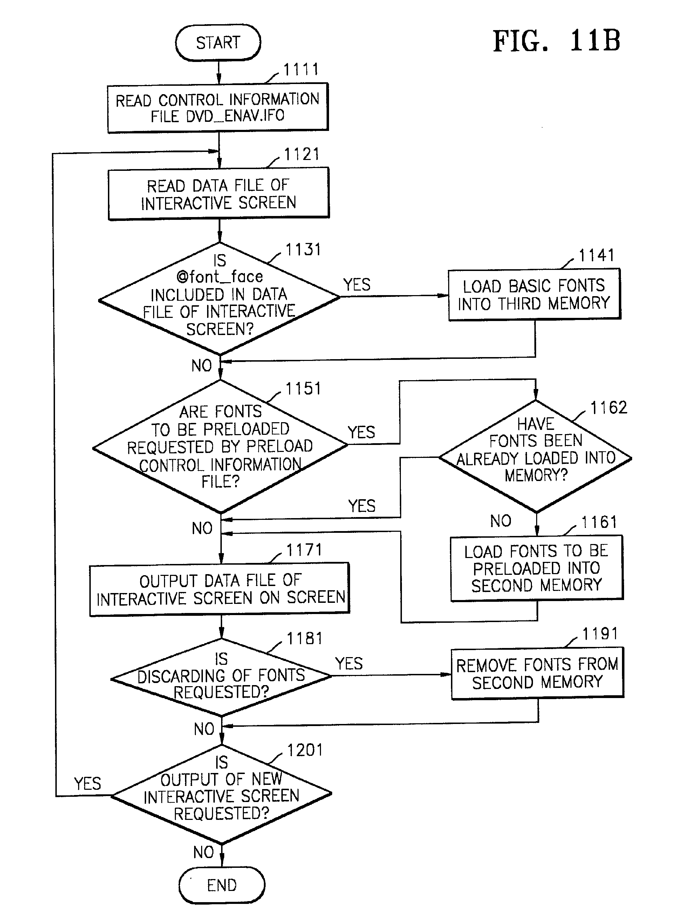

Figure 11B is a detailed view of Figure 10B and a flow chart illustrating a method for loading fonts stored in the interactive optical storage medium into an apparatus for reproducing information from the interactive optical storage medium.

Referring to Figures 5 through 7 and 11B, in step 1111, the file DVD_ENAV.IFO having control information for constituting an initial interactive screen is read from the interactive optical storage medium. In step 1121, data file of a defined interactive screen is read. In step 1131, it is checked whether a embedded font @font_face in the specification of cascading style sheet 2 (CSS 2) related to a web document is included in the data file (HTML document file) of the interactive screen. In step 1141, the embedded font @font_face is loaded into a memory (same as that of the third memory 960 of Figure 9) when the embedded font @font_face is included in the data file. In step 1151, it is checked whether the preloaded control information file in the data file of the interactive screen requests preloading of fonts. In step 1161, corresponding fonts are preloaded into a memory (same as that of the second memory 920 of Figure 9) when preloading of the fonts is requested by the preloaded control information file and the same fonts have been not loaded into the memory in step 1162. The apparatus checks whether or not there is the same font as a font identifier (ID) when loading of the fonts defined in the preload file, and then the apparatus loads the font having the same ID as the font ID into the second memory. When there is no font having the same ID as the font ID, the apparatus can load a font within a corresponding range into the second memory by referring the font-range defined in the preload file. In step 1171, the data file of the interactive screen is output on a screen when fonts to be preloaded are not requested by the preload control information file in step 1151, or when the same fonts have been already loaded into the memory of the apparatus, or after step 1161. In step 1191, the fonts are removed from the second memory when discard of the fonts stored in the second memory is requested in step 1181. The font-discard command is performed by discarding a corresponding font file or by removing a font having the same ID using a font identifier (ID). The above-mentioned operation is repeated from step 1131 when discarding of the fonts is not requested, or when output of a new interactive screen is requested after the fonts are removed from the second memory in step 1201.

As described above, the font of the interactive screen can be coincident with the language of the video screen, a font changed before the interactive screen is changed, is preloaded into the memory, thereby guaranteeing seamless reproduction of the A/V data, which are simultaneously reproduced.

While this invention has been particularly shown and described with reference to preferred embodiments thereof, it will be understood by those skilled in the art that various changes in form and details may be made therein without departing from the scope of the invention as defined by the appended claims.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An interactive optical storage medium comprising:
A/V data (500) including audio or video data; and
interactive data (510) which constitutes a predetermined interactive screen (952) including the A/V data and includes a command for preloading fonts for use in a plurality of interactive screens into a memory (920) of a reproducing apparatus during seamless reproduction.

2. The medium of claim 1, wherein the interactive data (510) are web-based documents.

3. The medium of claim 1 or 2, wherein the interactive data (510) includes a command for preloading font data for use in a subsequent interactive screen into the present interactive data during seamless reproduction.

4. The medium of claim 3, wherein a font identifier (ID) of a font to be preloaded is provided in the preload information when performing a command for preloading font data.

5. The medium of claim 3 or 4, wherein a font-range of a font to be preloaded is provided in the preload information when performing a command for preloading font data.

6. The medium of claim 5, wherein the font-range of the font is defined using a letter code which is stipulated according to an ISO 10646 standard.

7. The medium of claim 3 or any claim dependent thereon, wherein attribute information of a font to be preloaded is provided in the preload information when performing a command for preloading font data.

8. The medium of claim 7, wherein the attribute information of the font includes:
font-family representing a group in which the font is included and a font name,
font-style representing the style of the font,
font-variant representing whether or not the font can be represented as a bold type, font-weight representing the thickness of the font,
font-stretch representing the aspect ratio of the font, and
font-size representing the size of the font.

9. The medium of any preceding claim, further includes a discard command for removing a loaded font.

10. The medium of claim 9, wherein the discard command is a command for designating the path and name of a font file and removing them.

11. The medium of claim 9 or 10, wherein the discard command is a command for removing a font having a corresponding ID by designating a font ID.

12. The medium of any preceding claim, comprising:
an A/V data region (810) in which the A/V data including audio or video data is recorded;
an interactive data region (820) in which the predetermined interactive screen having the A/V data is constituted and the command for preloading fonts for use in a plurality of interactive screens into a memory of a reproducing apparatus during seamless reproduction is included; and
an interactive data-copying region (830) in which the same data as in the interactive data information region are stored in preparation for damages in the interactive data.

13. An apparatus for reproducing data from an interactive optical storage medium, the apparatus comprising:
a first memory (910) for storing A/V data read from the interactive optical storage medium;
a second memory (920) for storing interactive data read from the interactive optical storage medium;
an A/V data decoder (930) for decoding the A/V data stored in the first memory; and
an interpreting engine (940) for interpreting the interactive data from the second memory and outputting the interpreted interactive data on a screen;
wherein the second memory (920) takes fonts to be preloaded, from the interactive optical storage medium and stores the fonts when the interpreting engine (940) requests performance of a preload command.

14. The apparatus of claim 13, further comprising a third memory (960) having resident basic fonts, wherein the preloaded fonts are replaced with the basic fonts, and the basic fonts are output on a screen by the interpreting engine when there are no fonts preloaded into the second memory (920).

15. The apparatus of claim 13 or 14, wherein the interactive data includes a command for preloading font data for use in a subsequent interactive screen into the present interactive data during seamless reproduction.

16. The apparatus of claim 15, wherein the command for preloading font data provides a font ID in preload information and allows the interpreting engine to determine whether or not a font having the same ID as the font ID has been already loaded into a memory of the apparatus.

17. The apparatus of claim 15 or 16, wherein the command for preloading font data provides a font-range of a font to be preloaded in the preload information and allows the interpreting engine to preload a font within the font-range.

18. The apparatus of claim 17, wherein the font-range of the font is defined using a letter code which is stipulated according to an ISO 10646 standard.

19. The apparatus of any of claims 13 to 18, wherein the interpreting engine (940) removes a corresponding font from the second memory when the interactive data includes a discard command for removing a loaded font.

20. The apparatus of claim 19, wherein the interpreting engine (940) removes the corresponding font by discarding the path and name of a font file to be removed according to the discard command.

21. The apparatus of claim 19, wherein the interpreting engine (940) removes the corresponding font by discarding a font having the same ID as a font ID to be removed according to the discard command.

22. The apparatus of any of claims 13 to 21, wherein the interpreting engine (940) interprets HTMLs or JAVA scripts.

23. The apparatus of any of claims 13 to 22, wherein the interactive data are web-based documents.

24. The apparatus of any of claims 13 to 23, wherein the A/V data decoder (930) is a moving picture experts group (MPEG) decoder which decodes A/V data compressed in the format of MPEG.

25. The apparatus of any of claims 13 to 24, wherein the fonts stored in the second memory (920) according to the preload command, are fonts for use in a subsequent screen after the present interactive screen.

26. A system for reproducing data from an interactive optical storage medium, the system comprising:
an interactive optical storage medium (900) on which interactive data having a preload command and A/V data are recorded;
an apparatus (910,920,930,940) for reproducing data from the interactive optical storage medium, according to any of claims 13 to 25; and
a screen output unit (950), which forms a screen according to the interactive screen data received from the interpreting engine, synthesizes the A/V data received from the decoder, with the interactive screen data in the screen and outputs the result of synthesis.

27. The system of claim 26 including the apparatus of claim 14, wherein the interactive optical storage medium (900) further includes basic embedded font information @font_face, and the embedded font information is loaded into the third memory (960).

28. The system of claim 26 or 27, wherein the screen output unit (950) provides a moving picture screen region in which the decoded A/V data are reproduced, and a screen region in which network searching and linking and an interactive operation are performed.

29. A method for reproducing data from an interactive optical storage medium having preloaded font information, the method comprising:
reading a control information file having information for constituting an initial interactive screen, from the interactive optical storage medium;
loading fonts, which are defined by displayable languages and by the kind of basic fonts of the control information file, into a memory;
reading a data file of an interactive screen to be output;
reading an indicated preload file when a preload command is included in the data file of the interactive screen and loading fonts, which are defined by the preload file, into the memory of a reproducing apparatus;
outputting data of the interactive screen according to the data file of the interactive screen; and
synthesizing a screen in which A/V data are reproduced, with the interactive screen and outputting the result of synthesis.

30. The method of claim 29, wherein the command for preloading font data provides a font ID in preload information and allows the interpreting engine to determine whether or not a font having the same ID as the font ID has been already loaded into a memory of the apparatus.

31. The method of claim 29 or 30, wherein the command for preloading font data provides a font-range of a font to be preloaded in the preload information and allows the interpreting engine to preload a font within the font-range.

32. The method of claim 31, wherein the font-range of the font is defined using a letter code which is stipulated according to an ISO 10646 standard.

33. The method of any of claims 29 to 32, further comprising removing a corresponding font from the second memory when the interactive data includes a discard command for removing a loaded font.

34. The method of claim 33, wherein the path and name of a font file to be removed are searched for according to the discard command, and thus the corresponding font is removed.

35. The method of claim 33, wherein a font having the same ID as a font ID to be removed is searched for according to the discard command, and thus the corresponding font is removed.

36. A method for preloading fonts stored in an interactive optical storage medium into an apparatus for reproducing data from the interactive optical storage medium, the method comprising:
reading data file of an interactive screen from the interactive optical storage medium;
checking whether a preload command is included in the data file of an interactive screen and reading fonts to be preloaded from the interactive optical storage medium and loading the fonts into a memory of the apparatus for reproducing data from the interactive optical storage medium when the fonts to be preloaded are included in the data file of an interactive screen;
outputting a screen of interactive data; and
removing fonts from the memory when discarding of the fonts is requested.

37. The method of claim 36, wherein the command for preloading font data provides a font ID in preload information and allows the interpreting engine to determine whether or not a font having the same ID as the font ID has been already loaded into a memory of the apparatus.

38. The method of claim 36 or 37, wherein the command for preloading font data provides a font-range of a font to be preloaded in the preload information and allows the interpreting engine to preload a font within the font-range.

39. The method of claim 38, wherein the font-range of the font is defined using a letter code which is stipulated according to an ISO 10646 standard.

40. The method of any of claims 36 to 39, wherein discarding of the fonts is performed by searching the path and name of a font file to be removed and removing them.

41. The method of claim 40, wherein discarding of the fonts is performed by discarding a font having the same ID as the font ID to be removed and removing the corresponding font.

42. The method of any of claims 36 to 41, wherein the preload command is read before the interactive screen to be seamless-reproduced is output.

43. An interactive optical storage medium comprising:
a first table which defines displayable languages when a screen of interactive data is output;
a second table, which defines languages for use in the screen of interactive data, which corresponds to languages for use in a screen of A/V data; and
a third table which defines basic fonts to be used by languages defined by the first table.

44. The medium of claim 45, wherein the second table includes control information which automatically selects one from of the displayable languages defined by the first table, when a language for use in the screen of A/V data and a language for use in the screen of interactive data are not defined by the first table.
